(19) Europäisches Patentamt
European Patent Office
Office européen des brevets

(11) **EP 4 574 769 A1**

(12) **EUROPEAN PATENT APPLICATION**

(43) Date of publication:
**25.06.2025 Bulletin 2025/26**

(21) Application number: **24218321.8**

(22) Date of filing: **09.12.2024**

(51) International Patent Classification (IPC):
*C01G 53/44* [(2025.01)]    *C01G 53/84* [(2025.01)]
*H01M 4/00* [(2006.01)]

(52) Cooperative Patent Classification (CPC):
**C01G 53/44; C01G 53/84; H01M 4/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023 KR 20230187735**

(71) Applicants:
- **SAMSUNG SDI CO., LTD.
  Yongin-si, Gyeonggi-do 17084 (KR)**
- **Seoul National University R&DB Foundation
  Seoul 08826 (KR)**

(72) Inventors:
- **YOON, Jaesang
  17084 Yongin-si (KR)**

- **KONG, Youngsun
  17084 Yongin-si (KR)**
- **KANG, Seok Mun
  17084 Yongin-si (KR)**
- **JUN, Dowook
  17084 Yongin-si (KR)**
- **SEONG, Wonmo
  17084 Yongin-si (KR)**
- **HASE, Naoyuki
  17084 Yongin-si (KR)**
- **KANG, Kisuk
  06327 Seoul (KR)**
- **KO, Kunhee
  08826 Seoul (KR)**

(74) Representative: **Marks & Clerk LLP
15 Fetter Lane
London EC4A 1BW (GB)**

(54) **POSITIVE ACTIVE MATERIALS, PREPARATION METHODS THEREOF, POSITIVE ELECTRODES, AND RECHARGEABLE LITHIUM BATTERIES**

(57)    A method of preparing a positive electrode active material, a positive electrode and a rechargeable lithium battery are provided. The method of preparing the positive electrode active material includes mixing nickel-manganese-based composite hydroxide and a lithium raw material and subjecting them to primary heat treatment at about 200 °C to about 350 °C and secondary heat treatment at about 800 °C to about 1000 °C.

FIG. 6

EP 4 574 769 A1

**Description**

**BACKGROUND**

**1. Field of the Invention**

According to one or more embodiments, the present disclosure relates to positive electrode active materials, preparation methods thereof, positive electrodes including the positive electrode active materials, and rechargeable lithium batteries including the positive electrodes.

**2. Description of the Related Art**

A portable information device such as a cell phone, a laptop, smart phone, and/or the like and/or an electric vehicle may use, as a driving power source, a rechargeable lithium battery having relatively high energy density and relatively high (e.g., easy) portability. Recently, research has been actively conducted to use a rechargeable lithium battery with relatively high energy density as a driving power source, e.g., for hybrid and/or electric vehicles, and/or power storage power source, e.g., for resident power storage (e.g., a power wall).

One or more suitable positive electrode active materials have been investigated to achieve or realize rechargeable lithium batteries for applications to such uses. That is, various suitable positive electrode active materials have been investigated to develop rechargeable lithium batteries for such applications. Among them, lithium nickel-based oxide, lithium nickel manganese cobalt composite oxide, lithium nickel cobalt aluminium composite oxide, and lithium cobalt oxide are mainly (primarily) used as positive electrode active materials. However, while the demand for large-sized, high-capacity, or high-energy-density rechargeable lithium batteries has recently increased, the supply of a positive electrode active material including cobalt, a rare metal, is expected to be severely short. For example, because cobalt is expensive and there are not many remaining reserves, there is a desire (or need) for developing positive electrode active materials that exclude cobalt or reduce its content (e.g., reduce it in a substantial amount).

**SUMMARY**

One or more aspects are directed toward a positive electrode active material that includes a lithium nickel-manganese-based composite oxide. In the positive electrode active material, cation mixing is reduced and lithium ion diffusion is promoted to improve capacity, efficiency, and rate capability, and structural stability is enhanced to improve cycle-life characteristics.

One or more aspects are directed toward a method of preparing a positive electrode active material includes mixing a nickel-manganese-based composite hydroxide and a lithium raw material, applying a primary heat treatment at about 200 °C to about 350 °C, and applying a secondary heat treatment at about 800 °C to about 1000 °C.

Additional aspects will be set forth in part in the description which follows and, in part, will be apparent from the description, or may be learned by practice of the presented embodiments of the disclosure.

One or more embodiments provide a positive electrode active material including layered lithium nickel-manganese-based composite oxide represented by Chemical Formula 1.

$$\text{Chemical Formula 1} \qquad \text{Li}_{a1}\text{Ni}_{x1}\text{Mn}_{y1}\text{M}^1_{z1}\text{M}^2_{w1}\text{O}_{2-b1}\text{X}_{b1}$$

In Chemical Formula 1, $0.9 \leq a1 \leq 1.2$, $0.7 \leq x1 \leq 0.8$, $0.2 \leq y1 \leq 0.3$, $0 \leq z1 \leq 0.05$, $0 \leq w1 \leq 0.05$, $0.9 \leq x1+y1+z1+w1 \leq 1.1$, $0 \leq b1 \leq 0.1$, $M^1$ is Co, $M^2$ is at least one element(s) selected from among Al, B, Ba, Ca, Ce, Cr, Cu, Fe, Mg, Mo, Nb, Si, Sn, Sr, Ti, V, W, and Zr, and X is at least one element(s) selected from among F, P, and S.

One or more embodiments provide a positive electrode for a rechargeable lithium battery including the positive electrode active material.

One or more embodiments provide a rechargeable lithium battery including the positive electrode, a negative electrode, and an electrolyte.

At least some of the above and other features of the invention are set out in the claims.

The positive electrode active material according to one or more embodiments increases or maximizes capacity while minimizing or reducing production cost, and reduces cation mixing, promotes diffusion of lithium ions, improves charging and discharging efficiency and high rate capability, and secures structural stability to ensure high-temperature cycle-life characteristics.

## BRIEF DESCRIPTION OF THE DRAWINGS

FIGS. 1-4 are each a schematic diagram showing a lithium rechargeable battery according to one or more embodiments.

FIG. 5 is the heat treatment temperature profile according to the one-step (e.g., act or task) synthesis method of positive electrode active material according to Comparative Example 1.

FIG. 6 is a heat treatment temperature profile according to the two-step (e.g., act or task) synthesis method of the positive electrode active material according to Example 2.

FIG. 7 shows a scanning electron microscope (SEM) image (bottom) and a transmission X-ray microscope (TXM) analysis image (top) of a cross-section of the positive electrode active material prepared in Comparative Example 1 cut with a focused ion beam (FIB).

FIG. 8 shows an SEM image (bottom) and a TXM analysis image (top) of a cross-section of the positive electrode active material prepared in Example 2 cut with FIB.

FIG. 9 is a graph showing the internal porosity of the positive electrode active materials of Comparative Example 1 and Example 2.

FIG. 10 is a rate evaluation graph for the rechargeable lithium battery cells of Comparative Example 1 and Example 2.

FIG. 11 is a differential thermogravimetric-differential scanning calorimetric (DTG-DSC) analysis graph for a transition metal hydroxide (top) and a DTG-DSC analysis graph for a mixture of transition metal hydroxide and lithium hydroxide (bottom).

FIG. 12 is an enlarged graph of the region from about 200 °C to 350 °C in FIG. 11.

## DETAILED DESCRIPTION

Hereinafter, specific embodiments will be described in more detail so that those of ordinary skill in the art can easily implement them. Examples of the embodiments are illustrated in the accompanying drawings and are described by referring to the drawings to explain aspects of the present description. However, this disclosure may be embodied in many different forms and is not construed as limited to the example embodiments set forth herein, rather the present disclosure is defined by the scope of claims.

The terminology used herein is used to describe embodiments only, and is not intended to limit the present disclosure. The singular expressions "a," "an," and "the" include the plural expressions, including "at least one," unless the context clearly dictates otherwise.

As used herein, "combination thereof" refers to a mixture, a laminate, a composite, a copolymer, an alloy, a blend, a reaction product, and/or the like of the constituents.

Herein, it should be understood that terms such as "comprises," "comprise," "comprising," "includes," "including," "include," "having," "has," and/or "have" are intended to designate the presence of an embodied aspect, number, step (e.g., act or task), element, and/or a (e.g., any suitable) combination thereof, but it does not preclude the possibility of the presence or addition of one or more other aspects, numbers, steps (e.g., acts or tasks), elements, and/or a (e.g., any suitable) combination thereof.

In the drawings, the thicknesses of layers, films, panels, regions, and/or the like, are exaggerated for clarity and like reference numerals designate like elements throughout, and duplicative descriptions thereof may not be provided in the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

The term "layer" as used herein includes not only a shape formed on the whole surface if (e.g., when) viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g.,

simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" indicates that any additional components will not materially affect the chemical, physical, optical or electrical properties of a target portion.

Further, in this specification, the phrase "on a plane," or "plan view," indicates viewing a target portion from the top, and the phrase "on a cross-section" indicates viewing a cross-section formed by vertically cutting a target portion from the side.

## Definitions

The term "particle diameter" as utilized herein refers to an average diameter of particles if (e.g., when) the particles are spherical, and refers to an average major axis length of particles if (e.g., when) the particles are non-spherical. For example, the average particle diameter may be measured by a method suitable to those skilled in the art, for example, by a particle size analyzer, or by a transmission electron microscope image or a scanning electron microscope image. In one or more embodiments, it is possible to obtain an average particle diameter value by measuring using a dynamic light scattering method, performing data analysis, counting the number of particles for each particle size range, and calculating from this. Unless otherwise defined, the average particle diameter may refer to the diameter ($D_{50}$) of particles having a cumulative volume of 50 volume% in the particle size distribution. If (e.g., when) measuring by laser diffraction, more specifically, the particles to be measured are dispersed in a dispersion medium and then introduced into a related art laser diffraction particle size measuring device (e.g., MT 3000 available from Microtrac, Ltd.) utilizing ultrasonic waves at about 28 kHz, and after irradiation with an output of 60 W, the average particle diameter (D50) based on 50% of the particle size distribution in the measuring device can be calculated. As used herein, if (e.g., when) a definition is not otherwise provided, the average particle diameter refers to a diameter ($D_{50}$) of particles having a cumulative volume of 50 volume% in the particle size distribution that is obtained by measuring the size (diameter or major axis length) of about 20 particles at random in a scanning electron microscope image.

Herein, the term "or" is not to be construed as an exclusive meaning, for example, "A or B" is construed to include A, B, A+B, and/or the like.

Herein, the term "metal" is interpreted as a concept including ordinary metals, transition metals and metalloids (semi-metals).

## Method of Preparing Positive Electrode Active Material

In one or more embodiments, a method of preparing a positive electrode active material includes mixing a nickel-manganese-based composite hydroxide and a lithium raw material and applying a (e.g., subjecting them to) primary heat treatment at about 200 °C to about 350 °C, and applying a secondary heat treatment at about 800 °C to about 1000 °C.

As the price of cobalt, a rare metal, has recently risen sharply, there is a demand for the development of positive electrode active materials that exclude cobalt or reduce its content (e.g., amount). Among them, a positive electrode active material having an olivine crystal structure such as lithium iron phosphate (LFP), lithium manganese phosphate (LMP), lithium manganese iron phosphate (LMFP), and/or the like or a spinel crystal structure such as lithium manganese oxide (LMO) and/or the like each have a limitation in realizing high capacity due to a small available lithium amount within the structure. A layered lithium nickel-manganese-based positive electrode active material has excellent or suitable capacity and efficiency characteristics due to the high available lithium amount in the structure, making it suitable as a material for high-capacity batteries. However, as cobalt, which plays a key role in the layered structure, is removed, structural stability decreases, resistance increases, and it becomes difficult to secure long cycle-life characteristics. Cobalt is suitable to facilitate or play an important role in reducing cation disorder occurring within the structure. If (e.g., when) cobalt is replaced with Mn, $Ni^{3+}$ is reduced due to $Mn^{4+}$, resulting in an increase in $Ni^{2+}$ ions (e.g., cations) and resulting in worsening (e.g., increasing) cation disorder. If (e.g., when) cation disorder becomes worsened (e.g., increased), $Ni^{2+}$ ions may take the place of lithium, hindering (e.g., reducing) the diffusion of lithium ions. As a result, discharge capacity decreases and rate capability deteriorates as compared to materials with less worsened (e.g., less) cation disorder.

In general, when a positive electrode active material is synthesized, it is suitable that a decomposition reaction of transition metal hydroxide, which is a positive electrode active material precursor, and an intercalation (or lithiation) reaction of lithium may each occur at a substantially similar temperature. That is, when synthesizing a positive electrode active material, the decomposition reaction of transition metal hydroxide, a precursor of the positive electrode active material, and the intercalation (or lithiation) reaction of lithium may occur at substantially similar temperatures. Here, one or more embodiments, in the heat treatment of a mixture of the transition metal hydroxide and the lithium raw material, provide(s) a method of performing a primary heat treatment within a (e.g., preheat) temperature range where the intercalation reaction of lithium occurs, but the decomposition reaction of transition metal hydroxide does not occur (e.g., without continuously firing them at substantially the same (e.g., preheat) temperature range) and then, performing a secondary (e.g., final) heat treatment at a high temperature range. That is, the embodiments provide a method for the heat treatment of a mixture of transition metal hydroxide and lithium raw material. This method involves performing a primary heat treatment within a temperature range where the intercalation reaction of lithium occurs, but the decomposition reaction of transition metal hydroxide does not. Subsequently, a secondary heat treatment is performed at a higher temperature range. This synthesis method may reduce cation disorder of the layered lithium nickel-manganese-based composite oxide and thus promote diffusion of lithium ions to improve capacity, efficiency, and high rate capability and to reduce voids inside particles and thus improve or secure structural stability to improve high temperature cycle-life characteristics.

The primary heat treatment may be referred to as a preheat treatment or an intermediate heat treatment, which may occur within a temperature range where the nickel-manganese-based composite hydroxide is not decomposed, but the lithium intercalation reaction occurs. The primary heat treatment proceeds within a temperature range of about 200 °C to about 350 °C, for example, about 220 °C to about 350 °C, about 220 °C to about 300 °C, or about 250 °C to about 300 °C. After performing the primary heat treatment within the described temperature ranges, if (e.g., when) the secondary heat treatment subsequently proceeds to synthesize a layered lithium nickel manganese-based positive electrode active material, cation mixing and pores inside particles may be reduced to secure structural stability and thus improve capacity, efficiency, rate capability, and cycle-life characteristics of a rechargeable lithium battery.

The primary heat treatment may be performed under an oxygen atmosphere for about 0.5 hours to about 5 hours, or about 1 hour to about 4 hours, or about 1 hour to about 3 hours. If (e.g., when) the primary heat treatment is performed within the described time ranges, cation mixing and voids inside particles may be reduced to improve or secure structural stability. For example, if (e.g., when) the primary heat treatment time is too long (e.g., longer than the above time ranges), the cation mixing may not be reduced, or structural stability may not be improved.

The secondary heat treatment may be expressed or referred to as a main heat treatment or a final heat treatment and performed at about 800 °C to about 1000 °C, for example, about 800 °C to about 950 °C, about 820 °C to about 900 °C, or about 820 °C to about 880 °C. In some embodiments, the secondary heat treatment may be performed under an oxygen atmosphere for about 4 hours to about 12 hours, about 4 hours to about 8 hours, or about 4 hours to about 6 hours. The conditions of the secondary heat treatment such as a temperature, time, and/or the like may be adjusted respectively within the ranges to provide a positive electrode active material with improved structural stability by reducing cation mixing and voids in the structure.

For example, the primary heat treatment time may be less (e.g., shorter) than the secondary heat treatment time, for example, the primary heat treatment time and the secondary heat treatment time may have a ratio of about 1:2 to about 1:5. The primary heat treatment time and the secondary heat treatment time may be appropriately or suitably adjusted to provide a positive electrode active material with reduced cation disorder and improved structural stability.

The nickel-manganese-based composite hydroxide may have a nickel content (e.g., amount) of, for example, about 70 mol% to about 80 mol%, for example, about 72 mol% to about 78 mol%, or about 73 mol% to about 77 mol% relative to the total metal. Additionally, in the nickel-manganese-based composite hydroxide, a manganese content (e.g., amount) relative to the total metal may be about 20 mol% to about 30 mol%, for example, about 22 mol% to about 28 mol%, or about 23 mol% to about 27 mol%.

For example, the nickel-manganese-based composite hydroxide may be represented by Chemical Formula 11.

**Chemical Formula 11** $\quad$ $Ni_{x11}Mn_{y11}M^1_{z11}M^2_{w11}(OH)_2$

In Chemical Formula 11, $0.7 \leq x11 \leq 0.8$, $0.2 \leq y11 \leq 0.3$, $0 \leq z11 \leq 0.05$, $0 \leq w11 \leq 0.05$, and $0.9 \leq x11+y11+z11+w11 \leq 1.1$, and $M^1$ is Co, and $M^2$ is at least one (e.g., one or more) elements selected from among Al, B, Ba, Ca, Ce, Cr, Cu, Fe, Mg, Mo, Nb, Si, Sn, Sr, Ti, V, W, and Zr.

In Chemical Formula 11, for example, $0.73 \leq x11 \leq 0.77$ and $0.23 \leq y11 \leq 0.27$, and $0 \leq z11 \leq 0.01$, or $z11=0$.

The nickel-manganese-based composite hydroxide may be in a form of particles and may have an average particle diameter ($D_{50}$) of about 8 micrometers ($\mu$m) to about 20 $\mu$m, for example, about 8 $\mu$m to about 18 $\mu$m, about 8 $\mu$m to about 16 $\mu$m, about 8 $\mu$m to about 14 $\mu$m, or about 8 $\mu$m to about 12 $\mu$m. Additionally, the nickel-manganese-based composite hydroxide may be in a form of secondary particles formed by agglomerating a plurality of primary particles. For example, the secondary particles may (e.g., each) be an agglomeration of the plurality of primary particles.

In the preceding preparation method, a molar ratio of lithium in the lithium raw material to the total metal of the nickel-manganese-based composite hydroxide may be, for example, about 1.0 to about 1.2, about 1.01 to about 1.15, or about 1.03 to about 1.1.

**Positive Electrode Active Material**

In one or more embodiments, a positive electrode active material prepared through the aforementioned method is provided.

In one example, a positive electrode active material including a layered lithium nickel-manganese-based composite oxide represented by Chemical Formula 1 is provided.

**Chemical Formula 1** $\quad$ $Li_{a1}Ni_{x1}Mn_{y1}M^1_{z1}M^2_{w1}O_{2-b1}X_{b1}$

In Chemical Formula 1, $0.9 \leq a1 \leq 1.2$, $0.7 \leq x1 \leq 0.8$, $0.2 \leq y1 \leq 0.3$, $0 \leq z1 \leq 0.05$, $0 \leq w1 \leq 0.05$, $0.9 \leq x1+y1+z1+w1 \leq 1.1$, and $0 \leq b1 \leq 0.1$, $M^1$ is Co, $M^2$ is at least one (e.g., one or more) element selected from among Al, B, Ba, Ca, Ce, Cr, Cu, Fe, Mg, Mo, Nb, Si, Sn, Sr, Ti, V, W, and Zr, and X is at least one (e.g., one or more) element selected from among F, P, and S.

In Chemical Formula 1, for example, $0.72 \leq x1 \leq 0.78$ and $0.22 \leq y1 \leq 0.28$ or $0.73 \leq x1 \leq 0.77$ and $0.23 \leq y1 \leq 0.27$. Additionally, for example, $0 \leq z1 \leq 0.01$ or $z1=0$. Additionally, for example, $1 \leq a1 \leq 1.15$ (e.g. $1.0 \leq a1 \leq 1.15$ or $1.00 \leq a1 \leq 1.15$), or $1.03 \leq a1 \leq 1.1$. For example, $x1+y1+z1+w1=1$. For example, $\underline{1.0 \leq a1/(x1+y1+z1+w1) \leq 1.2.}$

The positive electrode active material may be in a form of secondary particles made by agglomerating a plurality of primary particles, e.g., the secondary particles of the positive electrode active material may (e.g., each) be an agglomeration of the plurality of primary particles. In one or more embodiments, the average particle diameter ($D_{50}$) of (e.g., of the secondary particles of) the positive active material may be about 8 $\mu$m to about 20 $\mu$m, for example, about 8 $\mu$m to about 18 $\mu$m, about 8 $\mu$m to about 16 $\mu$m, about 8 $\mu$m to about 14 $\mu$m, or about 8 $\mu$m to about 12 $\mu$m.

The cation mixing ratio of the positive electrode active material according to one or more embodiments may be less than, or equal to, about 3.5%, for example, less than, or equal to, about 3.2%, less than, or equal to, about 3%, or less than, or equal to, about 2.6%, for example, about 1% to about 3.5%.

In one or more embodiments, the porosity within the particles of the positive electrode active material may be less than, or equal to, about 5 volume%, for example, less than, or equal to, about 4 volume%, or may be about 1 volume% to about 5 volume%, based on 100 volume% of the positive electrode active material. Herein, the porosity may be measured, for example, through transmission X-ray microscopy (TXM).

**Positive Electrode**

In one or more embodiments, a positive electrode for a rechargeable lithium battery including the aforementioned positive electrode active material is provided. For example, in one or more embodiments, a positive electrode includes a positive electrode current collector and a positive electrode active material layer on the positive electrode current collector, wherein the positive electrode active material layer includes the aforementioned positive electrode active material. In one or more embodiments, the positive electrode active material layer may further include other types (kinds) of positive electrode active materials in addition to the positive electrode active materials described herein. Additionally, the positive electrode active material layer may optionally further include a binder, a conductive material, and/or a (e.g., any suitable) combination thereof.

**Binder**

The binder may improve binding properties of positive electrode active material particles with one another and/or with a current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

**Conductive Material**

The conductive material (e.g., electron conductor) is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

Each content (e.g., amount) of the binder and the conductive material may be about 0.5 wt% to about 5 wt% based on 100 wt% of the positive electrode active material layer.

The positive electrode current collector may include Al (aluminium), SUS (stainless steel), and/or the like, but the present disclosure is not limited thereto.

**Rechargeable Lithium Battery**

Some embodiments provide a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution. Some embodiments provide an all-solid-state rechargeable battery including the positive electrode, the negative electrode, and a solid electrolyte layer between the positive electrode and the negative electrode. A solid electrolyte layer in the context of the present disclosure is a material that conducts ions between the positive and negative electrodes while remaining in a solid state. Unlike liquid electrolytes, solid electrolytes offer improved safety, stability, and potentially higher energy densities. Hereinafter, for convenience, a configuration of a lithium ion battery using an electrolyte solution (e.g., a liquid electrolyte) will be described in more detail.

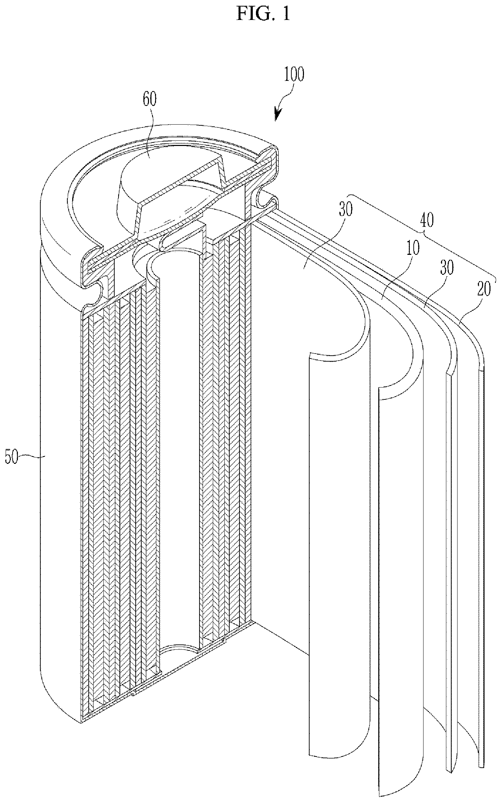

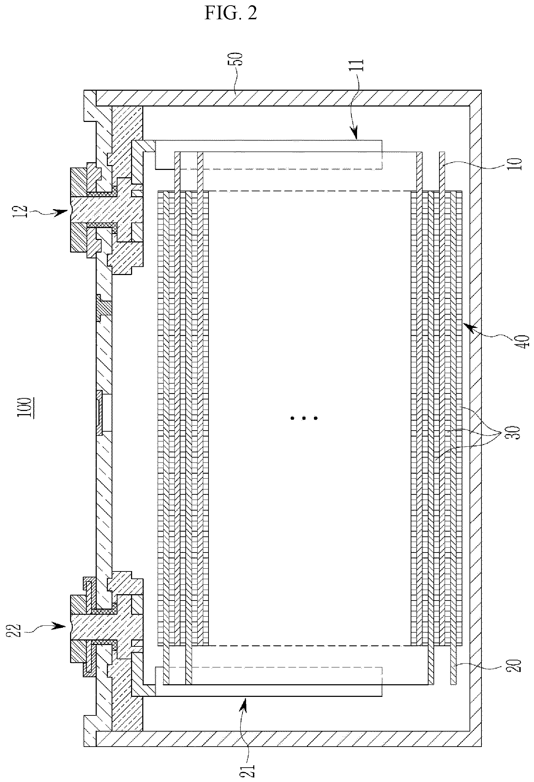

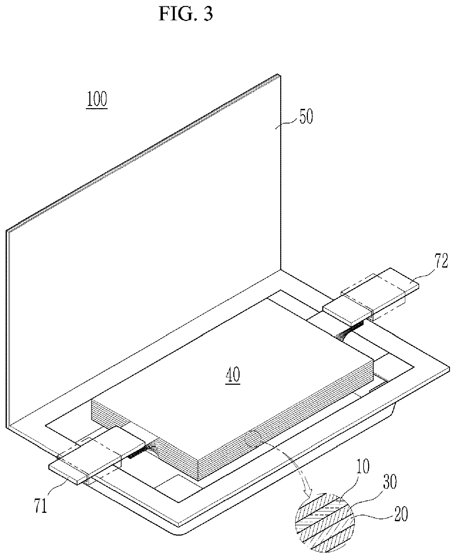

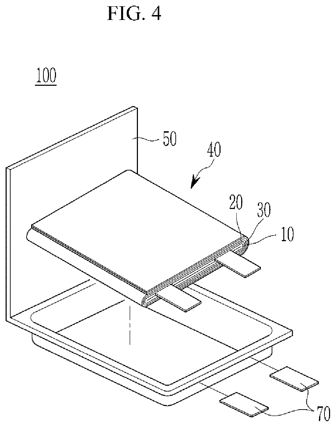

The rechargeable lithium battery may be classified into cylindrical, prismatic, pouch, coin, and/or the like depending on the shape. FIGS. 1 to 4 are each a schematic view showing the rechargeable lithium battery according to one or more embodiments, where FIG. 1 is a cylindrical battery, FIG. 2 is a prismatic battery, and FIGS. 3 and 4 are each a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes electrode tabs 70, for example, a positive electrode tab 71 and a negative electrode tab 72 serving as an electrical path for inducing the current formed in the electrode assembly 40 to the outside.

**Negative Electrode**

The negative electrode may include a current collector and a negative electrode active material layer on the current collector, and may further include a negative electrode active material, a binder, a conductive material, and/or a (e.g., any suitable) combination thereof.

**Negative Electrode Active Material**

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, and/or a (e.g., any suitable) combination thereof as a carbon-based negative electrode active material. The crystalline carbon may be irregular, or sheet, flake, spherical, or fiber shaped (e.g., in a form of fibers) natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (e.g., any suitable) combination thereof), and/or a (e.g., any suitable) combination thereof. The Sn-based negative electrode active material may be Sn, $SnO_2$, $SnO_x$ ($0 < x < 2$), a Sn alloy, and/or a (e.g., any suitable) combination thereof.

The silicon-carbon composite may be a composite of silicon and amorphous carbon. An average particle diameter ($D_{50}$) of the silicon-carbon composite particles may be, for example, about 0.5 μm to about 20 μm. According to one or more embodiments, the silicon-carbon composite may be in the form of silicon particles (e.g., silicon primary particles) and amorphous carbon coated on the surface of the silicon particles (e.g., silicon primary particles). For example, it may include a secondary particle (core) in which silicon primary particles are assembled (e.g., aggregated or agglomerated) and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles (e.g., silicon primary particles) and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and calcined coke.

When the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of the silicon-carbon composite. In one or more embodiments, when the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

Additionally, a thickness of the amorphous carbon coating layer may be about 5 nanometers (nm) to about 100 nm. An average particle diameter ($D_{50}$) of the silicon particles (e.g., silicon primary particles) may be about 10 nm to about 1 μm, or about 10 nm to about 200 nm. The silicon particles (e.g., silicon primary particles) may exist as silicon alone, in the form of a silicon alloy, or in an oxidized form. The oxidized form of silicon may be represented by $SiO_x$ ($0<x\leq2$). In one or more embodiments, the atomic content (e.g., amount) ratio of Si:O, which indicates a degree of oxidation, may be about 99:1 to about 33:67. As used herein, when a definition is not otherwise provided, an average particle diameter ($D_{50}$) indicates a particle where an accumulated volume is about 50 volume% in a particle distribution.

The Si-based negative electrode active material or Sn-based negative electrode active material may be mixed with the carbon-based negative electrode active material. If (e.g., when) the Si-based negative electrode active material or Sn-based negative electrode active material and the carbon-based negative electrode active material are mixed and used, the mixing ratio may be a weight ratio of about 1:99 to about 90:10.

**Binder**

The binder serves to well adhere the negative electrode active material particles to each other and also to adhere the negative electrode active material to the current collector. The binder may be a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

## Conductive Material

The conductive material (e.g., electron conductor) is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

## Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 $\mu$m to about 20 $\mu$m, about 5 $\mu$m to about 15 $\mu$m, or about 7 $\mu$m to about 10 $\mu$m.

## Electrolyte

For example, the electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether group, and/or the like; amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (kinds), and if (e.g., when) two or more types (kinds) are used in a mixture, a mixing ratio can be appropriately or suitably adjusted according to the desired or suitable battery performance, which is widely suitable to those working in the field.

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, $LiCl$, $Lil$, $LiN(SO_3C_2F_5)_2$, $Li(FSO_2)_2N$ (lithium bis(fluorosulfonyl)imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If (e.g., when) the concentration of lithium salt is within the described range, the electrolyte solution has appropriate or suitable ion conductivity and viscosity, and thus excellent or suitable performance can be achieved and lithium ions can move effectively.

**Separator**

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on a surface (e.g., one or both surfaces (e.g., opposite sides or surfaces)), of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON (tetrafluoroethylene), and polytetrafluoroethylene, or a copolymer or mixture of two or more thereof.

The porous substrate may have a thickness of about 1 μm to about 40 μm, for example, about 1 μm to about 30 μm, about 1 μm to about 20 μm, about 5 μm to about 15 μm, or about 10 μm to about 15 μm.

The organic material may include a (meth)acrylic copolymer including a first structural unit derived from (meth) acrylamide, and a second structural unit including at least one of a structural unit derived from (meth)acrylic acid or (meth) acrylate, and a structural unit derived from (meth)acrylamidosulfonic acid or a salt thereof.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiOs$, $Mg(OH)_2$, boehmite, and/or a (e.g., any suitable) combination thereof, but the present disclosure is not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 μm to about 20 μm, for example, about 1 μm to about 10 μm, or about 1 μm to about 5 μm.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6.

Examples and comparative examples of the present disclosure are described in more detail as follows. However, the following examples are only examples of the present disclosure, and the present disclosure is not limited to the following examples.

**EXAMPLES**

**Comparative Example 1**

**1. Preparation of Positive Electrode Active Material**

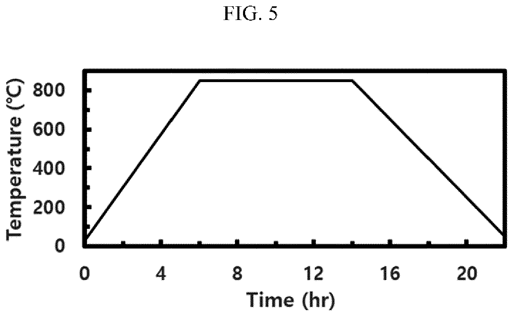

A positive electrode active material having a composition of $Li_{1.037}(Ni_{0.75}Mn_{0.25})_{0.963}O_2$ in the form of secondary particles with an average particle diameter ($D_{50}$) of about 10 $\mu$m was prepared by mixing $Ni_{0.75}Mn_{0.25}(OH)_2$ with an average particle diameter ($D_{50}$) of about 10 $\mu$m and LiOH to have a Li/(Ni+Mn) ratio of 1.077, raising the temperature for 6 hours, heat-treating the mixture at 850 °C under an oxygen atmosphere for 8 hours, and cooling it to room temperature. FIG. 5 shows a heat treatment temperature profile according to the one-step (e.g., act or task) synthesis method of Comparative Example 1.

**2. Manufacture of Rechargeable Lithium Battery Cell**

98.5 wt% of the positive electrode active material, 1.0 wt% of a polyvinylidene fluoride binder, and 0.5 wt% of a carbon nanotube conductive material were mixed to prepare positive electrode active material layer slurry, and the slurry was coated on an aluminium foil current collector and then, dried and compressed to manufacture a positive electrode.
97.5 wt% of a graphite negative electrode active material, 1.5 wt% of carboxymethyl cellulose, and 1 wt% of a styrene butadiene rubber in a water solvent were mixed to prepare a negative electrode active material layer slurry. The negative electrode active material layer slurry was coated on a copper foil current collector and then, dried and compressed to manufacture a negative electrode.
A polytetrafluoroethylene separator was used, and an electrolyte solution prepared by dissolving 1 M $LiPF_6$ in a mixed solvent of ethylene carbonate and dimethyl carbonate in a volume ratio of 3:7 was used to manufacture a rechargeable lithium battery cell in a common method.

**Example 1**

A positive electrode active material and a rechargeable lithium battery cell were manufactured in substantially the same manner as in Comparative Example 1 except that the positive electrode active material was prepared by mixing $Ni_{0.75}Mn_{0.25}(OH)_2$ and LiOH, then, applying a primary heat-treatment to (e.g., primarily heat-treating) the mixture at 200 °C for 2 hours by increasing a temperature for about 2 hours, applying a secondary heat-treatment to the mixture (e.g., secondarily heat-treating it) at 850 °C for 6 hours by increasing the temperature for 4 hours, and cooling it to room temperature.

**Example 2**

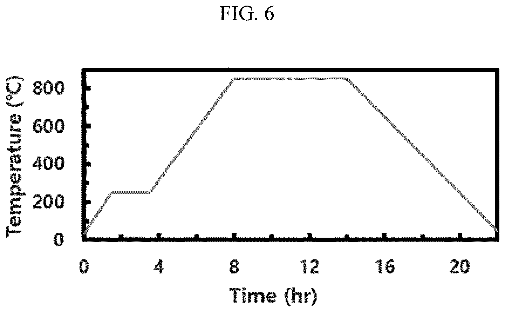

A positive electrode active material and a rechargeable lithium battery cell were manufactured in substantially the same manner as in Example 1 except that primary heat treatment temperature was changed to 250 °C. FIG. 6 shows a heat treatment temperature profile according to the two-step (e.g., act or task) synthesis method of Example 2.

**Example 3**

A positive electrode active material and a rechargeable lithium battery cell were manufactured in substantially the same manner as in Example 1 except that the primary heat treatment temperature was changed to 300 °C.

**Example 4**

A positive electrode active material and a rechargeable lithium battery cell were manufactured in substantially the same manner as in Example 1 except that the primary heat treatment temperature was changed to 350 °C.

**Comparative Example 2**

A positive electrode active material and a rechargeable lithium battery cell were manufactured in substantially the same manner as in Example 1 except that the primary heat treatment temperature was changed to 400 °C.

**Evaluation Example 1: Cation Mixing**

Each of the positive electrode active materials of Examples 1 to 4 and Comparative Examples 1 and 2 was measured with respect to cation mixing ratio, which was a percentage (%) of nickel ions ($Ni^{2+}$) incorporated into lithium (Li) sites through X-ray diffraction analysis (XRD) and Rietveld analysis, and the results are shown in Table 1. For example, the cation mixing ratio may be calculated as the ratio of a (003) plane peak intensity to a (104) plane peak intensity, as shown in the following formula.

$$\text{The cation mixing ratio (\%)} = I_{(003)}/I_{(104)} \times 100$$

The (003) plane peak may appear at $2\theta$ of about 18° to about 19°, and the (104) plane peak may appear at $2\theta$ of about 44.5° in XRD. The (003) plane peak may provide information on the layered phase of the positive electrode active material, and the (104) plane peak may provide information on the layered and cubic rock-salt structure. The (003) plane refers to a lattice plane corresponding to the Miller index (003).

Table 1

|  | Primary heat treatment (°C) | Secondary heat treatment (°C) | Cation mixing (%) |
|---|---|---|---|
| Comparative Example 1 | - | 850 | 4.38 |
| Example 1 | 200 | 850 | 3.27 |
| Example 2 | 250 | 850 | 2.42 |
| Example 3 | 300 | 850 | 2.59 |
| Example 4 | 350 | 850 | 2.87 |
| Comparative Example 2 | 400 | 850 | 4.71 |

Referring to Table 1, in Examples 1 to 4, to which the two-step (e.g., act or task) synthesis method according to one or more embodiments was applied, cation mixing was reduced in the positive electrode active materials, which facilitated diffusion of lithium ions and improved charging and discharging efficiency, rate capability, and/or the like. That is, in Examples 1 to 4, where the two-step synthesis method was applied, cation mixing was reduced in the positive electrode active materials. This reduction facilitated the diffusion of lithium ions and improved charging and discharging efficiency, rate capability, and other related performance metrics.

**Evaluation Example 2: Internal Pore Analysis**

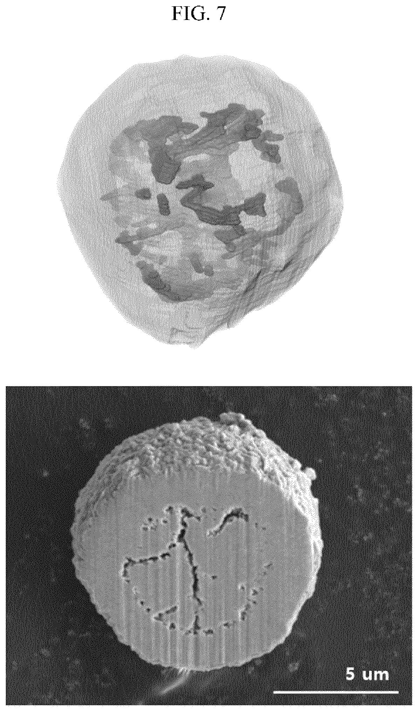

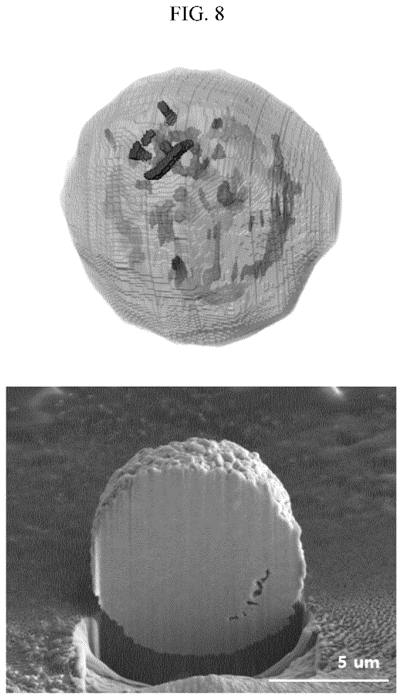

The positive electrode active materials according to Comparative Example 1 and Example 2 were cut with FIB and scanning electron microscope (SEM) images of their cross-sections were obtained. The SEM images and images of analyzing pores and voids inside the particles with transmission X-ray microscope (TXM) are shown at the bottom and top, respectively of each of FIGS. 7 and 8. Comparing FIG. 7 with FIG. 8, Example 2, as compared to Comparative Example 1, exhibited significantly reduced voids (internal voids) inside the secondary particles and pores (internal pores) inside the primary particles, and achieved increased structural stability.

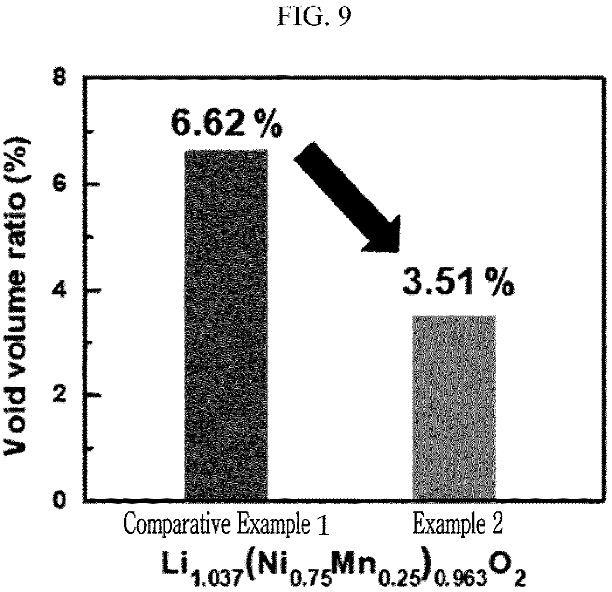

In one or more embodiments, through the TXM analysis, porosity of the positive electrode active materials of Comparative Example 1 and Example 2 was analyzed, which is shown in FIG. 9. The porosity shown in FIG. 9 refers to volume% of pores based on 100 volume% of total pores of the positive electrode active material particles. Referring to FIG. 9, compared to 6.62 volume% of Comparative Example 1, porosity of Example 2 decreased to 3.51 volume%. Accordingly, the two-step (e.g., act or task) synthesis method according to one or more embodiments was applied to reduce pores in the positive electrode active material and improve structural stability and thereby, improve cycle-life characteristics. That is, the two-step synthesis method was applied to reduce pores in the positive electrode active material, enhance structural stability, and thereby improve cycle-life characteristics. The TXM specifically refers to a full-field TXM, utilizing equipment developed by the Pohang Accelerator Laboratory. The TXM can be described as an analytical method for identifying the entire pore structure within a single secondary particle.

**Evaluation Example 3: Initial Charge/discharge Capacity and Efficiency, Cycle-life Characteristics, and Rate Capability**

The rechargeable lithium battery cells according to Comparative Example 1 and Examples 2 and 3 were charged to 4.5 V at a constant current of 0.2 C and to 0.05 C at the constant voltage and then, discharged to 3.0 V at 0.2 C at 25 °C to proceed with initial charging and discharging. In Table 2, initial charge capacity, initial discharge capacity, and a ratio of the latter to the former as initial charging and discharging efficiency are provided.

Subsequently, the cells were 100 times repeatedly charged and discharged at 0.5 C within a voltage range of 2.8 V to 4.7 V at 45 °C to calculate a ratio of 100th discharge capacity to the initial discharge capacity, which is provided as cycle-life in Table 2.

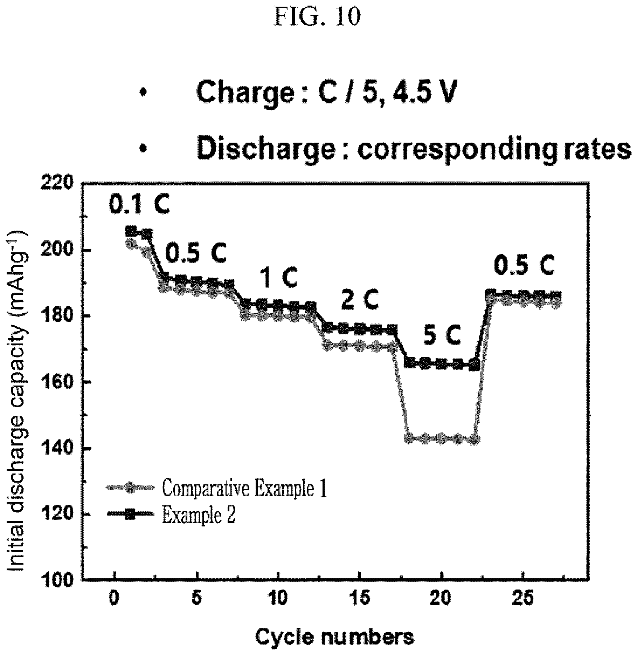

Independently, the rechargeable lithium battery cells of Comparative Example 1 and Example 2 were charged to 4.5 V at 0.2 C and then, discharged at 0.1 C, 0.5 C, 1 C, 2 C, 5 C, and 0.5 C at 25 °C to proceed with a rate evaluation, and the results are shown in FIG. 10.

Table 2

| | Charge capacity (mAh/g) | Discharge capacity (mAh/g) | Charging and discharging efficiency (%) | Cycle-life (%, @ 100 cycles) |
|---|---|---|---|---|
| Comparative Example 1 | 237.15 | 201.60 | 85.01 | 83.82 |
| Example 2 | 239.95 | 206.18 | 85.93 | 89.67 |
| Example 3 | 239.18 | 209.42 | 87.55 | 85.11 |

Referring to Table 2, in each of Examples 2 and 3, compared to Comparative Example 1, initial discharge capacity was increased, and charging and discharging efficiency and cycle-life characteristics were improved. In the positive electrode active materials of Examples 2 and 3, cracks and voids inside secondary particles were reduced, improving high temperature cycle-life performance.

Referring to FIG. 10, Example 2 exhibited much more excellent or suitable discharge capacity characteristics at high rates of 2 C and 5 C than Comparative Example 1. In Example 2, diffusion of lithium ions was promoted due to a decrease in cation disorder in the positive electrode active material, and accordingly, rate characteristics were improved.

**Evaluation Example 4: DTG-DSC**

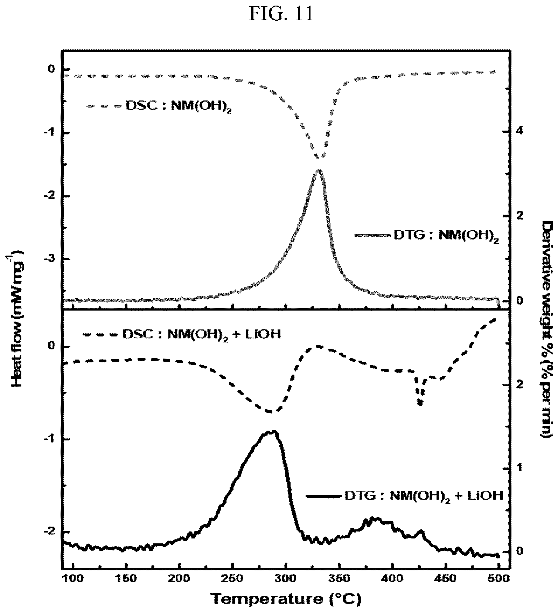

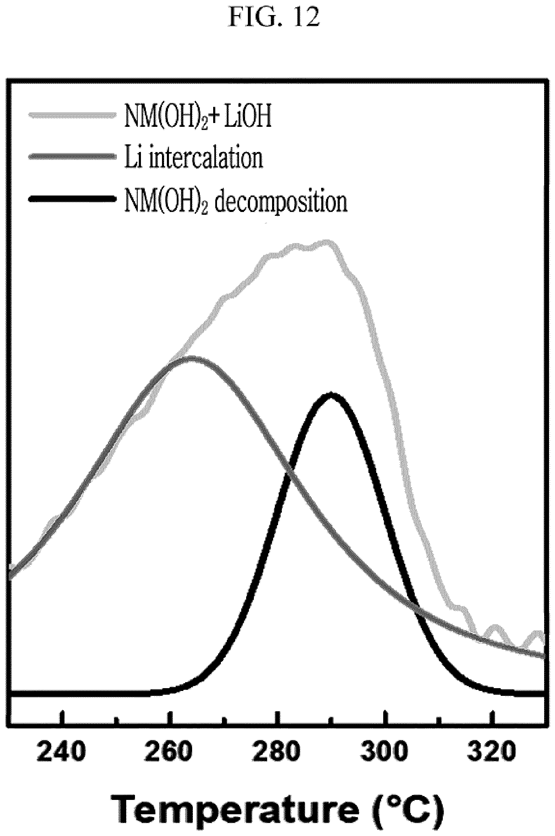

A differential thermogravimetric-differential scanning calorimetric (DTG - DSC) analysis was performed on a sample of $Ni_{0.75}Mn_{0.25}(OH)_2$ and a mixed sample of $Ni_{0.75}Mn_{0.25}(OH)_2$ and LiOH, and the results are shown in FIG. 11. An upper graph of FIG. 11 shows the result of the single transition metal hydroxide sample, which confirms that its decomposition occurred at 300 °C. A lower graph of FIG. 11 shows the result of the mixed sample of transition metal hydroxide and lithium raw material, which confirms that its decomposition occurred at a lower temperature than 300 °C. FIG. 12 is an enlarged graph of FIG. 11 in a region of about 200 to 350 °C including graph-curves corresponding to intercalation of lithium and decomposition of the transition metal hydroxide precursor are labeled "Li intercalation" and "$NM(OH)_2$ decomposition," respectively. Referring to FIG. 12, the lithium intercalation occurred, but no decomposition of the transition metal precursor occurred at about 250 °C, wherein after performing the primary heat treatment within this temperature range, a secondary heat treatment proceeded at a high temperature, thereby reducing cation disorder and pores insides the particles and thus improving structural chemical stability. That is, as shown in FIG. 12, lithium intercalation occurred at about 250°C without decomposition of the transition metal precursor. After performing the primary heat treatment within this temperature range, a secondary heat treatment at a higher temperature was conducted, reducing cation disorder and pores inside the particles, thereby improving structural and chemical stability.

A battery (e.g., a positive electrode active material) manufacturing device, a battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the components of the device may be formed on one integrated circuit (IC) chip or on separate IC chips. Further, the components of the device may be implemented on a flexible printed circuit film, a tape carrier package (TCP), a printed circuit board (PCB), or formed on one substrate. Further, the components of the device may be a process or thread, running on one or more processors, in one or more computing devices, executing computer program instructions and interacting with other system components for performing the functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of computing devices may be combined or integrated into a single computing device, or the functionality of a particular computing device may be distributed across one or more other computing devices without departing from the scope of the present disclosure.

In the context of the present application and unless otherwise defined, the terms "use," "using," and "used" may be considered synonymous with the terms "utilize," "utilizing," and "utilized," respectively.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While the present disclosure has been described in connection with what is presently considered to be practical example embodiments, it is to be understood that present disclosure is not limited to the disclosed embodiments. In contrast, it is intended to cover one or more suitable modifications and equivalent arrangements included within the scope of the appended claims, and equivalents thereof.

### Reference Numerals

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

### Claims

1. A method comprising:

   mixing a nickel-manganese-based composite hydroxide and a lithium raw material to form a mixture;
   applying to the mixture a primary heat treatment at 200 °C to 350 °C; and
   applying to the mixture a secondary heat treatment at 800 °C to 1000 °C,
   wherein the method is a method for preparing a positive electrode active material.

2. The method as claimed in claim 1, wherein
   a temperature of the primary heat treatment is 220 °C to 300 °C.

3. The method as claimed in claim 1 or claim 2, wherein
   the primary heat treatment is applied in an oxygen atmosphere for 0.5 hours to 5 hours.

4. The method as claimed in any one of claims 1 to 3, wherein
   the secondary heat treatment is applied in an oxygen atmosphere for 4 hours to 12 hours.

5. The method as claimed in any one of claims 1 to 4, wherein
   a time of the primary heat treatment is less than a time of the secondary heat treatment.

6. The method as claimed in any one of claims 1 to 5, wherein
   a nickel amount of the nickel-manganese-based composite hydroxide relative to a total metal of the nickel-manganese-based composite hydroxide is 70 mol% to 80 mol%.

7. The method as claimed in claim 1, wherein

   the nickel-manganese-based composite hydroxide is represented by Chemical Formula 11:

   **Chemical Formula** 11 $\quad\quad$ $Ni_{x11}Mn_{y11}M^1_{z11}M^2_{w11}(OH)_2,$

   wherein, in Chemical Formula 11,

$$0.7 \le x11 \le 0.8,$$

$$0.2 \le y11 \le 0.3,$$

$$0 \le z11 \le 0.05,$$

$$0 \le w11 \le 0.05,$$

$$0.9 \le x11+y11+z11+w11 \le 1.1,$$

$M^1$ is Co, and
$M^2$ is at least one element selected from among Al, B, Ba, Ca, Ce, Cr, Cu, Fe, Mg, Mo, Nb, Si, Sn, Sr, Ti, V, W, and Zr.

8. The method as claimed in any one of claims 1 to 7, wherein:

(i) the nickel-manganese-based composite hydroxide comprises particles having an average particle diameter ($D_{50}$) of 8 $\mu$m to 20 $\mu$m; and/or
(ii) a molar ratio of lithium in the lithium raw material to a total metal of the nickel-manganese-based composite hydroxide is 1.0 to 1.2.

9. A positive electrode active material, the positive electrode active material comprising a layered lithium nickel-manganese-based composite oxide represented by Chemical Formula 1:

**Chemical Formula** 1 $\quad\quad Li_{a1}Ni_{x1}Mn_{y1}M^1_{z1}M^2_{w1}O_{2-b1}X_{b1}$

wherein, in Chemical Formula 1,

$$0.9 \le a1 \le 1.2,$$

$$0.7 \le x1 \le 0.8,$$

$$0.2 \le y1 \le 0.3,$$

$$0 \le z1 \le 0.05,$$

$$0 \le w1 \le 0.05,$$

$$0.9 \le x1+y1+z1+w1 \le 1.1,$$

$$0 \le b1 \le 0.1,$$

$M^1$ is Co,
$M^2$ is at least one element selected from among Al, B, Ba, Ca, Ce, Cr, Cu, Fe, Mg, Mo, Nb, Si, Sn, Sr, Ti, V, W, and Zr, and
X is at least one element selected from among F, P, and S.

10. The positive electrode active material as claimed in claim 9, wherein:

(i) in Chemical Formula 1, $0.73 \le x1 \le 0.77$ and $0.23 \le y1 \le 0.27$; and/or

(ii) in Chemical Formula 1, $0 \leq z1 \leq 0.01$; and/or
(iii) in Chemical Formula 1, $1.03 \leq a1 \leq 1.1$.

11. The positive electrode active material as claimed in claim 9 or claim 10, wherein:

(i) the positive electrode active material comprises secondary particles, each of the secondary particles being an agglomeration of a plurality of primary particles; and/or
(ii) the positive electrode active material have an average particle diameter ($D_{50}$) of 8 $\mu$m to 20 $\mu$m.

12. The positive electrode active material as claimed in any one of claims 9 to 11, wherein:

(i) a cation mixing ratio of the positive electrode active material is less than, or equal to, 3.5%; and/or
(ii) a porosity within the particles of the positive electrode active material measured through transmission X-ray microscopy analysis is less than, or equal to, 5 volume% based on 100 volume% of the positive electrode active material.

13. A positive electrode comprising the positive electrode active material prepared as claimed in any one of claims 1 to 8, wherein the positive electrode is for a rechargeable lithium battery.

14. A rechargeable lithium battery, comprising

the positive electrode as claimed in claim 13,
a negative electrode, and
an electrolyte.

15. An all-solid-state rechargeable battery, comprising

the positive electrode as claimed in claim 13,
a negative electrode, and
a solid electrolyte layer between the positive electrode and the negative electrode.

## FIG. 1

FIG. 2

## FIG. 3

FIG. 4

FIG. 5

FIG. 6

FIG. 7

FIG. 8

## FIG. 9

FIG. 10

FIG. 11

FIG. 12

Europäisches
Patentamt

European
Patent Office

Office européen
des brevets

## EUROPEAN SEARCH REPORT

**Application Number**

EP 24 21 8321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/343551 A1 (CHO KWANGHWAN [KR] ET AL) 29 October 2020 (2020-10-29) * example comp.ex.4 * | 1-8 | INV. C01G53/44 C01G53/84 H01M4/00 |
| X | CN 105 098 177 A (CONTEMPORARY AMPEREX TECHNOLOGY LTD) 25 November 2015 (2015-11-25) * example 24 * | 9-15 | |
| X | WO 2020/195790 A1 (HITACHI METALS LTD [JP]) 1 October 2020 (2020-10-01) * page 21 - page 26; example 1 * | 1-15 | |

**TECHNICAL FIELDS
SEARCHED     (IPC)**

C01G
H01M

The present search report has been drawn up for all claims

| Place of search | Date of completion of the search | Examiner |
|---|---|---|
| Munich | 7 May 2025 | Doslik, Natasa |

EPO FORM 1503 03.82 (P04C01)

**ANNEX TO THE EUROPEAN SEARCH REPORT**
**ON EUROPEAN PATENT APPLICATION NO.**                    EP 24 21 8321

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2025

| Patent document cited in search report | Publication date | Patent family member(s) | | Publication date |
|---|---|---|---|---|
| US 2020343551 A1 | 29-10-2020 | CN | 111864194 A | 30-10-2020 |
| | | JP | 7033161 B2 | 09-03-2022 |
| | | JP | 2020184534 A | 12-11-2020 |
| | | US | 2020343551 A1 | 29-10-2020 |
| CN 105098177 A | 25-11-2015 | CN | 105098177 A | 25-11-2015 |
| | | US | 2015311522 A1 | 29-10-2015 |
| WO 2020195790 A1 | 01-10-2020 | CN | 112654585 A | 13-04-2021 |
| | | EP | 3950599 A1 | 09-02-2022 |
| | | JP | 6986211 B2 | 22-12-2021 |
| | | JP | WO2020195790 A1 | 20-05-2021 |
| | | KR | 20210035300 A | 31-03-2021 |
| | | US | 2022115656 A1 | 14-04-2022 |
| | | WO | 2020195790 A1 | 01-10-2020 |

EPO FORM P0459

For more details about this annex : see Official Journal of the European Patent Office, No. 12/82